Europäisches Patentamt

European Patent Office

Office européen des brevets

(19)

(11) Numéro de publication: **0 224 051**
**B1**

(12) **FASCICULE DE BREVET EUROPEEN**

(45) Date de publication du fascicule du brevet:
08.11.89

(51) Int. Cl.⁴: **H02B 13/02, H01H 9/10**

(21) Numéro de dépôt: **86114861.7**

(22) Date de dépôt: **27.10.86**

(54) Poste à hexafluorure de soufre pour commutation en charge.

(30) Priorité: **30.10.85 FR 8516141**

(43) Date de publication de la demande:
**03.06.87 Bulletin 87/23**

(45) Mention de la délivrance du brevet:
**08.11.89 Bulletin 89/45**

(84) Etats contractants désignés:
**BE DE ES FR GB GR IT LU NL**

(56) Documents cités:
**CH-A- 424 948**
**DE-A- 2 920 153**

(73) Titulaire: **ALSTHOM, 38, avenue Kléber, F-75784 Paris Cédex 16(FR)**

(72) Inventeur: **Maineult, Jean, Revonnas,**
**F-01250 Ceyzeriat(FR)**
Inventeur: **Pluveau, Raymond, Le Coteau de la Grisère Sance, F-71000 Macon(FR)**

(74) Mandataire: **Weinmiller, Jürgen et al,**
**Lennéstrasse 9 Postfach 24, D-8133 Feldafing(DE)**

EP 0 224 051 B1

## Description

La présente invention est relative à un poste à hexafluorure de soufre pour commutation en charge moyenne tension, comprenant des bornes d'entrée et de sortie, des interrupteurs et des fusibles.

On connait, notamment par le brevet européen n° 0.059.255 un poste de ce type. Un but de la présente invention est de réaliser une installation de dimensions plus réduites, dont tous les accès ou sorties sont situés sur une seule face. Un autre but de la présente invention est de réaliser une installation dans laquelle les fusibles soient aisément accessibles.

Un autre but de la présente invention est de réaliser une installation dans laquelle les interrupteurs assurent une coupure rapide et limitent l'arc à la fermeture.

Un autre but de l'invention est de réaliser une installation dont la tenue mécanique au vide nécessaire avant remplissage de gaz isolant soit assurée.

Un autre but de l'invention est de réaliser un poste dans lequel une fusion des fusibles soit aisément détectée.

L'invention a pour objet un poste à hexafluorure de soufre pour commutation en charge comprenant un boîtier métallique étanche rempli d'hexafluorure de soufre sous pression, au moins deux jeux de traversées d'entrée pour la connexion d'un nombre égal de câbles d'arrivée triphasés un nombre égal de traversées reliées à la terre, un nombre égal d'interrupteurs arrivée triphasés à trois positions, une position ouverte, une position reliant le câble à la terre, et une position fermée et un interrupteur départ triphasé à trois positions, une position ouverte, une position à la terre et une position fermée reliant les autres interrupteurs à un jeu de fusibles, et un jeu de traversées de sortie reliés aux fusibles, caractérisé en ce que toutes les traversées, tous les accès aux fusibles et tous les organes de manoeuvre des interrupteurs sont disposés sur une même face du boîtier.

Les caractéristiques et avantages de l'invention apparaîtront à la lumière de la description donnée ci-après d'un mode préféré de réalisation de l'invention, en référence au dessin annexé dans lequel :

- la figure 1 est un schéma électrique unifilaire du poste triphasé de l'invention
- la figure 2 est une vue de la face avant du du poste, en élévation partiellement arrachée
- la figure 3 est une vue en coupe du poste de l'invention selon la ligne III.III de la figure 2
- la figure 4 est une vue en coupe axiale d'un interrupteur équipant le poste de l'invention
- la figure 5 est une vue en bout d'un interrupteur équipant le poste de l'invention
- la figure 6 est une vue en coupe selon la figure VI.VI de la figure V
- la figure 7 est une vue en coupe d'un étui à fusible muni d'un détecteur de fusion.

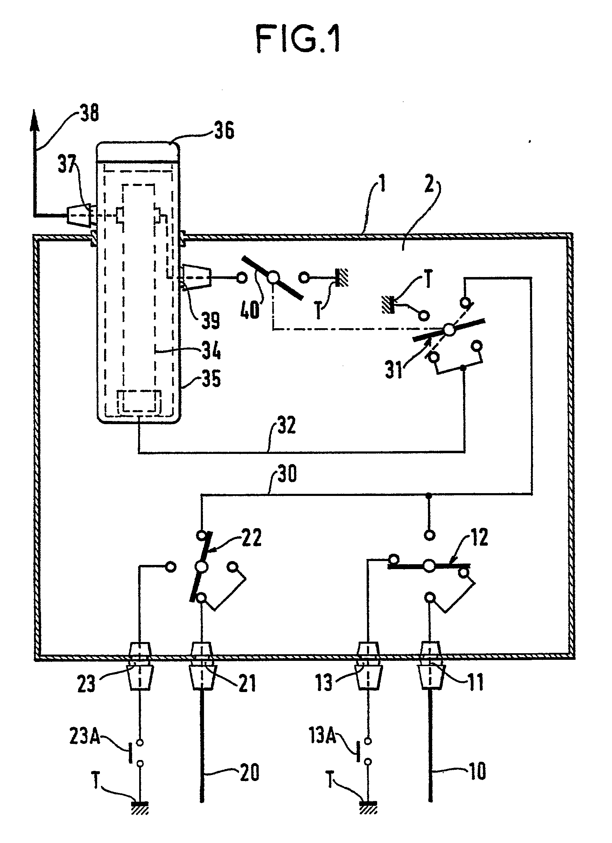

Dans la figure 1, le schéma électrique du poste de l'invention est un schéma unifilaire.

En outre ce schéma ne représente pas la disposition réelle des éléments, qui prévoit selon une caractéristique essentielle de l'invention, que toutes les bornes ou traversées sont sur la face avant.

Le poste de l'invention comprend un boitier métallique 1, étanche, rempli d'un gaz à haut pouvoir diélectrique, tel que l'hexafluorure de soufre.

On a représenté deux arrivées de courant triphasées 10 et 20 qui pénètrent dans le boitier par des traversées isolantes étanches 11 et 21 respectivement. Les traversées isolantes sont reliées à des interrupteurs tripolaires amont 12 et 22 à trois positions (fermé, ouvert, à la terre). La mise à la terre se fait par des traversées 13 et 23. Les références 13 A et 23 A désignent des connexions démontables permettant d'injecter une tension d'essai des câbles.

L'interrupteur 12 et représenté en position à la terre ou essai de câble.

L'interrupteur 22 est représenté en position fermée et est relié, par une connexion 30 à un interrupteur triphasé aval 31 qui a également trois positions : ouvert (comme représenté), fermé (traits interrompus) ou à la terre.

Une connexion 32 relie l'interrupteur 31 à un fusible 34, placé dans un étui 35. Selon une autre caractéristique de l'invention, l'intérieur de l'étui est rempli d'air et communique avec l'extérieur du boitier 1. Il est fermé par un bouchon 36. Une traversée 37 permet la liaison à un câble de sortie 38.

On note que la mise à la terre du poste par l'interrupteur 31 entraîne une mise à la terre en aval du fusible par rotation d'un sectionneur 40 relié au fusible par une traversée 39.

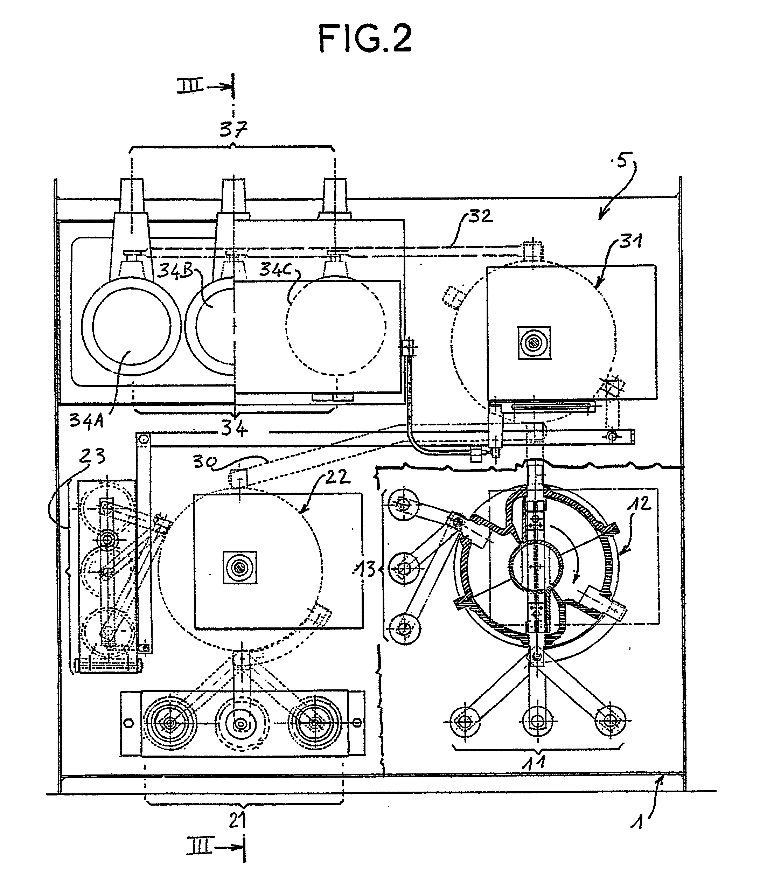

La figure 2 est une schématique en élévation partiellement éclatée du poste de l'invention.

On voit la face avant 5 du poste et l'on observe que toutes les bornes sont accessibles.

On distingue en effet, traversant la face avant du boîtier, les traversées 11 et 21 des câbles d'arrivée, les traversées 13 et 23 pour la mise à la terre ou les essais de câble et les traversées 37 de sortie du poste.

On voit aussi dans la figure 2, les interrupteurs 12, 22 et 31, la connexion 30 entre l'interrupteur 22 et l'interrupteur 31 et la connexion 32 entre l'interrupteur 31 et les fusibles 34 A, 34 B, 34 C.

La face avant porte les extrémités des arbres de manoeuvre des interrupteurs et les signalisations conventionnelles illustrant la position de ceux-ci.

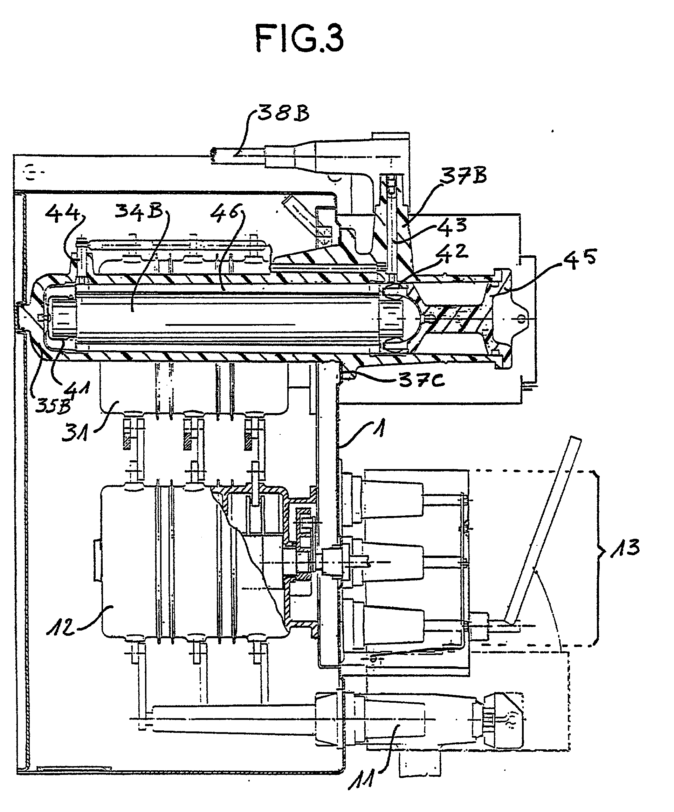

La figure 3 permet de distinguer un détail, l'étui ou puits 35 B dans lequel est placé le fusible 34 B, et la traversée isolante 37 B.

Cette dernière vient de moulage avec l'étui 35 B et comprend une surface annulaire 37 C s'appuyant de manière étanche sur la paroi du boîtier 1.

Le fusible est enserré entre des pinces métalliques 41 et 42. La pince 42 sert de contact électrique pour le noyau métallique 43 de la traversée isolante 37B. L'autre prise de courant du fusible 34 B est référencée 44, elle est reliée électriquement à la pince 41. Le contact 42 est fixé à une pièce isolante 45 s'engageant dans l'étui 35 B et formant bouchon. Le fusible est placé dans l'air. Il est aisément accessible sans intervention dans l'enceinte remplie d'hexafluorure de soufre. La zone d'arc annulaire 46 entre le fusible et l'étui permet un bon refroidissement de ce dernier.

On distingue également dans la figure 3 l'interrupteur 31 et l'interrupteur (partiellement arraché) 12, les bornes d'arrivée 11 et les bornes de mise à la terre amont 13.

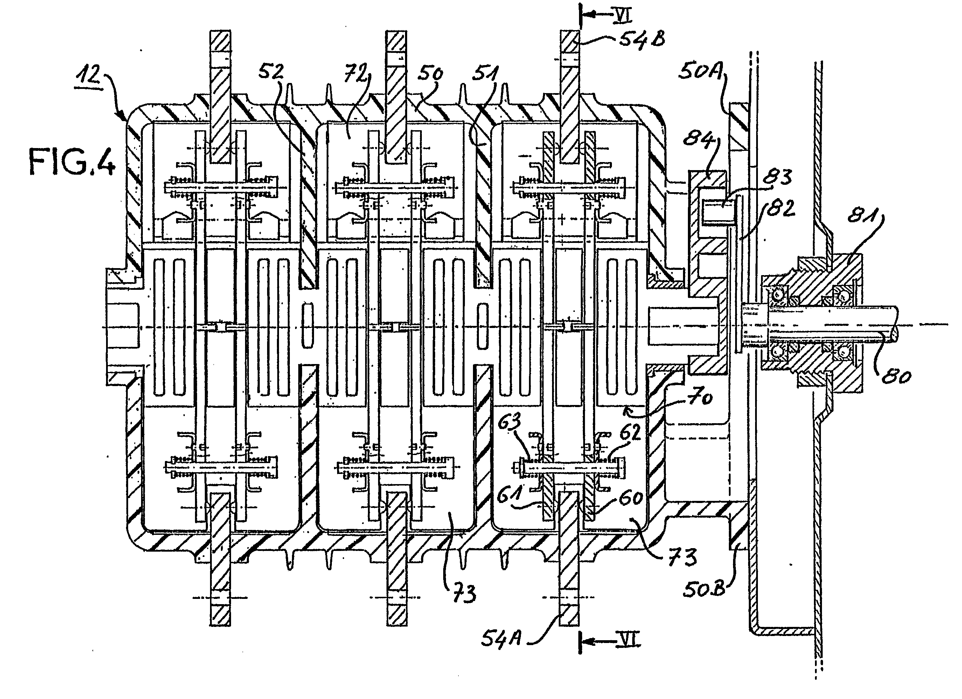

La figure 4 est une vue en coupe axiale d'un interrupteur, par exemple l'interrupteur 12.

Il comprend un capot 50 sensiblement cylindrique, muni de cloisons internes transversales 51 et 52 séparant les jeux de contacts. Le capot est formé de deux demi-coquilles moulées 50 A, 50 B, assemblées par boulonnages tels que 53.

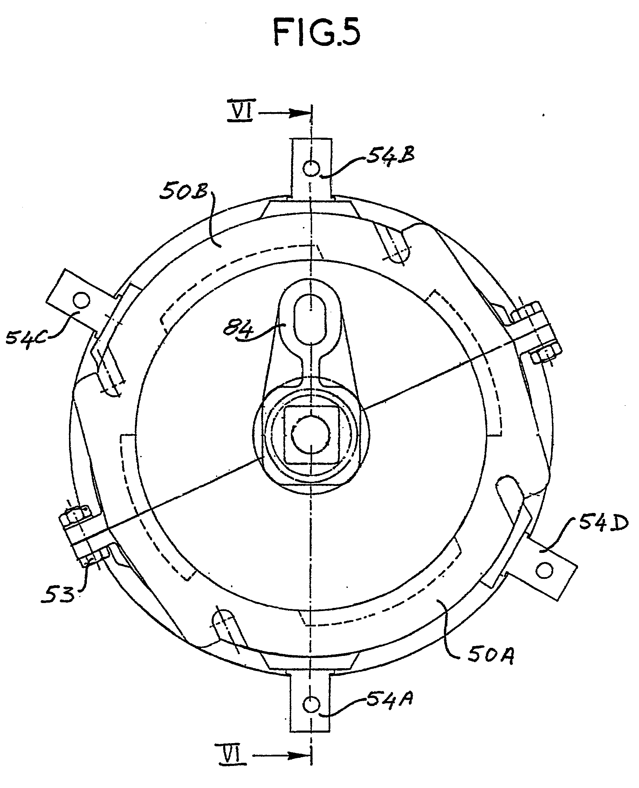

Pour chaque phase, l'interrupteur comprend 4 plots de contact : 54A arrivée, 54 B sortie vers interrupteur 31, 54 C reliée à la terre 54 D non reliée (figure 5)..

Ces bornes se prolongent à l'intérieur du capot et coopèrent avec des contacts à doubles lames telles que 60 et 61 (figure 4). Les lames sont serrées par des ressorts tels que 62 et 63.

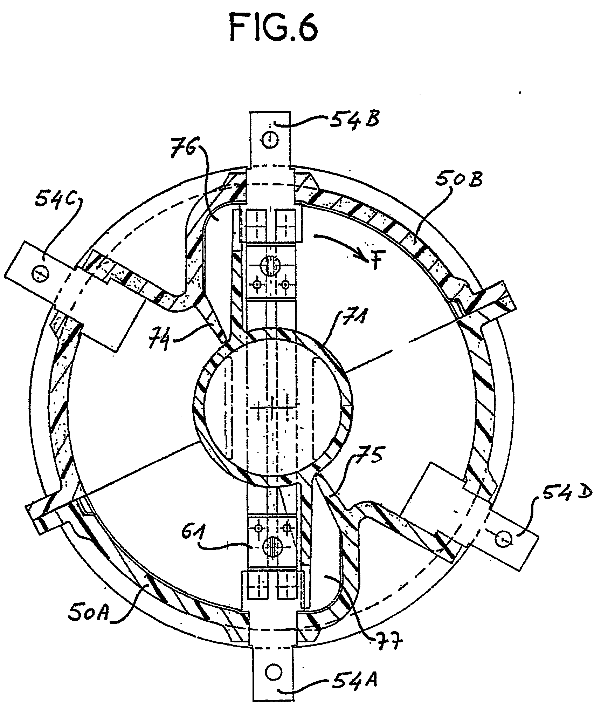

L'ensemble des lames est porté par un arbre 70 comprenant une partie cylindrique 71 (figure 6) et pour chaque phase, deux palettes 72 et 73, s'étendant jusqu'au voisinage de la paroi interne du capot 50 de l'interrupteur.

Ces ailettes coopèrent respectivement avec des portions planes 74 et 75 du capot, s'étendant vers l'intérieur du capot jusqu'au voisinage de la partie cylindrique 71 de l'arbre, pour constituer des volumes variables 76 et 77. Lors d'une coupure de courant, par rotation de l'arbre dans le sens de la flèche f, une dépression se crée derrière la palette dans les volumes 76 et 77 à l'ouverture des contacts, ce qui favorise le mouvement du gaz et l'extinction de l'arc.

A la fermeture des contacts, (sens inverse de la rotation de l'arbre) une compression se produit devant la palette et retarde la formation de l'arc.

L'arbre 70 et les palettes 72 et 73 sont avantageusement réalisés en une seule pièce moulée, en matière plastique. Il en est de même des demi-coquilles 50 A et 50 B qui portent les portions 74 et 75.

L'arbre 70 est entraîné en rotation par un arbre métallique 80 (figure 4) traversant la paroi 1 par une traversée étanche 81 à roulements, et entraînant une manivelle 82 munie d'un ergot 83 qui coopère avec une pièce de liaison 84 solidaire de l'arbre 70.

On manoeuvre le poste par des manivelles non représentées, fixées (à demeure ou de façon amovible) sur les arbres 80.

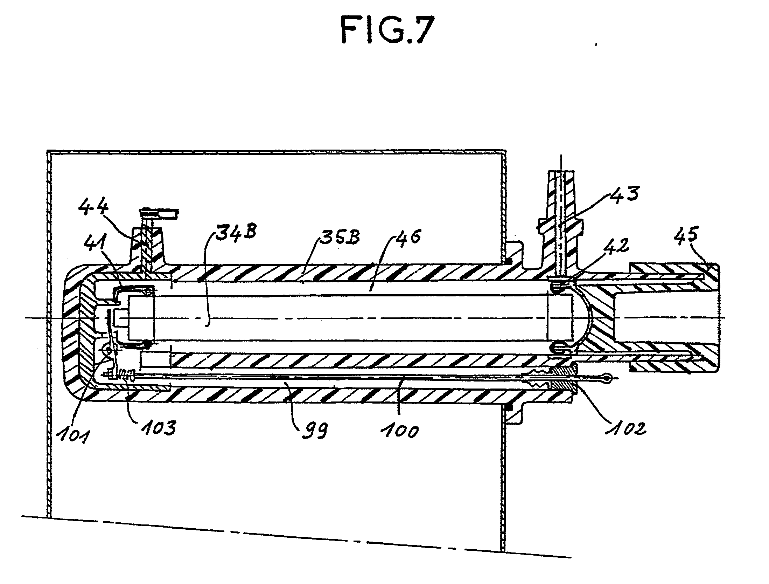

La figure 7 représente une variante de réalisation du puits à fusible. Les éléments communs aux figures 3 et 7 ont reçu les mêmes numéros de référence.

Dans un second puits 99 parallèle au puits 35B est placée une tringle 100, fixée par une extrémité à une première extrémité d'un levier 101 et dont l'autre extrémité traverse à frottement doux un bouchon pressé étoupe 102. Un ressort 103 enfilé sur la tige, maintient la seconde extrémité du levier contre le fusible.

En cas de fusion de ce dernier, le percuteur du fusible la dilatation pousse la seconde extrémité du levier, entraînant une translation de la tige. Le mouvement de la tige est détecté à l'extérieur du puits à fusible et utilisé pour fournir un signal d'alarme, de signalisation ou de commande.

Le poste de l'invention est compact.

Toutes bornes sont accessibles de la face avant, ce qui facilite son utilisation puisque trois de ses faces verticales peuvent être contre un mur ou un autre appareil.

Les interrupteurs qui équipent le poste sont particulièrement performants sur le plan de la coupure et de la fermeture.

Les fusibles sont très accessibles et bien refroidis.

Le poste tient bien au vide (ce qui arrive au cours de l'installation) ou à la pression car les éléments internes (fusibles, interrupteurs) contribuent à la rigidité de la paroi du boîtier métallique sur lequel ils sont directement fixés.

Le poste s'applique aux moyennes tensions, c'est à dire comprises entre 3 et 36 kV.

## Revendications

1/ Poste à hexafluorure de soufre pour commutation en charge comprenant un boîtier métallique étanche (1) rempli d'hexafluorure de soufre sous pression, au moins deux jeux de traversées d'entrée (11,21) pour la connexion d'un nombre égal de câbles d'arrivée triphasés (10,20) un nombre égal de traversées (13,23) reliées à la terre, un nombre égal d'interrupteurs arrivée triphasés (12,22) à trois positions, une position ouverte, une position reliant le câble à la terre, et une position fermée et un interrupteur départ triphasé (31) à trois positions, une position ouverte, une position à la terre et une position fermée reliant les autres interrupteurs à un jeu de fusibles (34), et un jeu de traversées de sortie (37) reliés aux fusibles, caractérisé en ce que toutes les traversées (11,21,37), tous les accès aux fusibles (34) et tous les organes de manoeuvre des interrupteurs sont disposés sur une même face du boîtier (1).

2/ Poste selon la revendication 1, caractérisé en ce que les fusibles (34) sont disposés dans des étuis ou puits individuels (35) partiellement disposés à l'intérieur du boîtier (1) et ayant un orifice de sortie débouchant dans l'air à l'extérieur du boîtier et fermés par un bouchon (36), les étuis étant remplis d'air.

3/ Poste selon la revendication 2 caractérisé en ce qu'une tringle (100) est disposée dans un second puits (99) parallèle au premier, ladite tringle dépassant à l'extérieur de l'étui, ladite tringle étant associée à un moyen mécanique (101) lui communiquant un mouvement de translation lors de la fusion du fusible.

4/ Poste selon l'une des revendications 1 à 3 caractérisé en ce que l'interrupteur (12,22,31) comprend un capot sensiblement cylindrique (50) munis de cloisons transversales (51,52) séparant les phases, pour chaque phase quatre plots de contact (54 A, 54 B, 54 C, 54 D) traversant le capot et un arbre central portant des lames de contact (60), et pour chaque phase, deux palettes (72,73) s'étendant entre deux cloisons et jusqu'à la paroi cylindrique du capot, lesdites palettes étant placées au voisinage des lames, le capot présentant pour chaque phase deux portions planes (74,75) s'étendant jusqu'au voisinage de l'arbre pour délimiter avec les palettes deux volumes (76,77).

5/ Poste selon l'une des revendications I à 4 caractérisé en ce qu'il comprend un sectionneur de terre (40) mettant à la terre l'aval des fusibles lorsque l'interrupteur aval (31) est positionné à la terre.

## Claims

1. A sulphur hexafluoride apparatus for load switch-over, comprising a sealed metal casing (1) filled with sulphur hexafluoride under pressure, at least two sets of input through connectors (11, 12) for the connection of a corresponding number of three-phase input cables (10, 20), a corresponding number of through connectors (13, 23) connected to earth, a corresponding number of three-phase input interrupters (12, 22) each having three position, an open position, a position in which the cable is connected to earth and a closed position, and a three-phase output interrupter (31) having three positions, an open position, an earthed position and a closed position in which the other interrupters are connected to a set of fuses (34), and a set of output through connectors (37) which are connected to the fuses, characterized in that all the through connectors (11, 21, 37), all the inputs to the fuses (34) and all the members for actuating the interrupters are arranged on the same face of the casing (1).

2. An apparatus according to claim 1, characterized in that the fuses (34) are arranged in individual cases or tube wells (35) which lie partially inside the casing (1) and have an output opening which leads into the air outside the casing and which are closed by means of a stopper (36), the cases being filled with air.

3. An apparatus according to claim 2, characterized in that a rod (100) is arranged in a second tube well (99) parallel to the first one, said rod extending to the outside of the case and being associated with a mechanical means (101) which imparts a shifting movement to the rod in the case of rupture of the fuse.

4. An apparatus according to any one of claims 1 to 3, characterized in that the interrupter (12, 22, 31) comprises a substantially cylindrical cover (50) provided with transverse partitions (51, 52) which separate the phases, four contact elements (54A, 54B, 54C, 54D) for each phase, which extend through the cover, and a central shaft carrying contact blades (60), and, for each phase, two vanes (72, 73) which extend between two partitions as far as the cylindrical wall of the cover, the said vanes being located in the vicinity of the blades, the cover having for each phase two flat portions (74, 75) which extend as far as the vicinity of the shaft in order to define with the vanes two volumes (76, 77).

5. An apparatus according to any one of claims 1 to 4, characterized in that it comprises an earthing section switch (40) which connects the downstream end of the fuses to earth when the downstream interrupter (31) is connected to earth.

## Patentansprüche

1. Lastschalterstation mit Schwefelhexafluoridfüllung, die ein dichtes, mit Schwefelhexafluorid unter Druck gefülltes Metallgehäuse (1), mindestens zwei Sätze Eingangsdurchführungen (11, 21) zum Anschluß von ebenso vielen dreiphasigen Eingangskabeln (10, 20), ebenso viele geerdete Durchführungen (13, 23), ebenso viele dreiphasige Schalter (12, 22) mit drei Schaltstellungen, nämlich einer geöffneten Stellung, einer das Kabel erdenden Stellung und einer geschlossenen Stellung und einen dreiphasigen Ausgangsschalter (31) mit drei Schaltstellungen, nämlich einer geöffneten Stellung, einer geerdeten Stellung und einer die anderen Schalter an einen Satz Sicherungen (34) anschließenden Stellung und einen an die Sicherungen angeschlossenen Satz Ausgangsdurchführung (37) aufweist, dadurch gekennzeichnet, daß alle Durchführungen (11, 21, 37), alle Zugänge zu den Sicherungen (34) und alle Betätigungsorgane für die Schalter auf derselben Seite des Gehäuses angeordnet sind.

2. Station nach Anspruch 1, dadurch gekennzeichnet, daß die Sicherungen (34) je in einem Etui oder Einzelschacht (35) untergebracht sind, die teilweise im Inneren des Gehäuses (1) angeordnet sind und eine Austrittsöffnung besitzen, die in die Luft außerhalb des Gehäuses mündet und mit einem Stopfen (36) verschlossen ist, wobei die Etuis mit Luft gefüllt sind.

3. Station nach Anspruch 2, dadurch gekennzeichnet, daß eine Stange (100) in einem zweiten Schacht (99) parallel zum ersten angeordnet ist, welche aus dem Etui hervorragt und mit einem mechanischen Mittel (101) in Verbindung steht, welches ihr beim Schmelzen der Sicherungen eine Translationsbewegung verleiht.

4. Station nach einem der Ansprüche 1 bis 3, dadurch gekennzeichnet, daß der Schalter (12, 22, 31) eine im wesentlichen zylindrische Kapselung (50) mit Quertrennwänden (51, 52) zur Trennung der Phasen, für jede Phase vier die Kapselung durchdringende Kontaktstifte (54A, 54B, 54C, 54D) sowie eine zentrale mit Kontaktmessern (60) ausgestattete Welle sowie für jede Phase zwei sich zwischen zwei Trennwänden erstreckende und bis zur zylindrischen Kapselung reichende Paletten (72, 73) aufweist, wobei die Paletten in der Nähe der Messer angeordnet sind und die Kapselung für jede Phase zwei ebene Abschnitte (74, 75) besitzt, die sich bis in die Nähe der Welle erstrecken, um mit den Paletten zwei Räume (76, 77) abzugrenzen.

5. Station nach einem der Ansprüche 1 bis 4, dadurch gekennzeichnet, daß sie einen Erdtrennschalter (40) aufweist, der den ausgangsseitigen Teil der Sicherungen an Erde legt, wenn der ausgangsseitige Schalter (31) auf Erde geschaltet ist.

# FIG.1

# FIG.2

# FIG.3

FIG.4

# FIG.5

# FIG.6

# FIG.7